# EUROPÄISCHE PATENTSCHRIFT

(11) **EP 0 925 334 B1**
(45) Veröffentlichungstag und Bekanntmachung des Hinweises auf die Patenterteilung: **31.10.2001**
(21) Anmeldenummer: 97940125.4
(22) Anmeldetag: 25.08.1997
(51) Int. Cl.: C09D 5/44

(54) **WÄSSRIGE ELEKTROTAUCHLACKE, IHRE VERWENDUNG IN VERFAHREN ZUR BESCHICHTUNG ELEKTRISCH LEITFÄHIGER SUBSTRATE SOWIE DIE VERWENDUNG VON SILBERIONEN UND/ODER VON ELEMENTAREM SILBER IN WÄSSRIGEN ELEKTROTAUCHLACKEN**
AQUEOUS ELECTROPHORETIC ENAMELS, THEIR USE IN PROCESSES FOR COATING ELECTRICALLY CONDUCTIVE SUBSTRATES, AND THE USE OF SILVER IONS AND/OR ELEMENTAL SILVER IN AQUEOUS ELECTROPHORETIC ENAMELS
PRODUIT AQUEUX DE TREMPAGE ELECTROPHORETIQUE, SON UTILISATION DANS DES PROCEDES DE REVETEMENT DE SUBSTRATS ELECTROCONDUCTEURS ET UTILISATION D'IONS ARGENT ET/OU D'ARGENT ELEMENTAIRE DANS DES PRODUITS AQUEUX DE TREMPAGE ELECTROPHORETIQUE

(30) Priorität: 14.09.1996 DE 19637559
(43) Veröffentlichungstag der Anmeldung: 30.06.1999
(73) Patentinhaber: BASF Coatings Aktiengesellschaft, 48165 Münster (DE)
(72) Erfinder: BREMSER, Wolfgang, D-48165 Münster (DE); ZDAHL, Norbert, D-59387 Ascheberg (DE); STRAUSS, Udo, D-48149 Münster (DE); JOUCK, Walter, D-48167 Münster (DE); ARLT, Klaus, D-48308 Senden (DE); STREITBERGER, Hans-Joachim, D-48165 Münster (DE); GILBERT, John, A., Beverly Hills, MI 48025 (US)
(74) Vertreter: Fitzner, Uwe, Dr.
(86) Internationale Anmeldenummer: EP9704624
(87) Internationale Veröffentlichungsnummer: WO9811169

(56) Entgegenhaltungen:
- GB-A- 2 008 152
- US-A- 4 210 506
- US-A- 5 366 004
- PATENT ABSTRACTS OF JAPAN vol. 096, no. 009, 30.September 1996 & JP 08 120496 A (CHIYUUGAI KOGYO KK;TOSHIN KK), 14.Mai 1996,

## Beschreibung

Die vorliegende Erfindung betrifft Silberionen und/oder elementares Silber enthaltende wäßrige Elektrotauchlacke, deren Verwendung in Verfahren zur Beschichtung elektrisch leitfähiger Substrate und die Verwendung von Silberionen und/oder elementarem Silber in wäßrigen Elektrotauchlacken.

Bei wäßrigen Beschichtungsmitteln sowie den zur Herstellung dieser Beschichtungsmittel eingesetzten wäßrigen Komponenten, wie z.B. Bindemittel-Dispersionen, Pigmentpasten u.ä., besteht insbesondere aus Umweltgesichtspunkten der Wunsch nach einem möglichst niedrigen Lösemittelgehalt. Außer dem gewunschten Effekt einer geringeren Belastung der Umwelt führt die Reduzierung des Lösemittelgehaltes jedoch auch zu Problemen. So tritt beispielsweise vermehrt das Problem des Bakterien- und/oder Pilzbefalls dieser wäßrigen Systeme auf.

Auch auf dem Gebiet der Elektrotauchlacke stellt beispielsweise der Bakterien- bzw. Pilzbefall der mit dem Elektrotauchlack befüllten Becken ein schwerwiegendes Problem dar. Probleme bereitet aber auch der Bakterien-bzw. Pilzbefall der in den Elektrotauchlackierverfahren eingesetzten weiteren Komponenten, wie z.B. des Ultrafiltrats, des Rezirkulats, des Anolyten, des Kompensats etc. Hierdurch bedingt kann es zu den verschiedenartigsten Problemen kommen, wie z.B. Oberflächenstörungen im abgeschiedenen Lackfilm, verschlechtertem Verlauf, Koagulation des Elektrotauchlackes u.ä.

Es sind daher verschiedene Maßnahmen zur Erhöhung der Bakterienrestistenz der Elektrotauchlacke ergriffen worden. Problematisch ist dabei jedoch, daß durch die gewünschte Erzielung der bakteriziden bzw. fungiziden Wirkung die anderen Eigenschaften der Elektrotauchlacke nicht verschlechtert werden dürfen.

Zur Erhöhung der Bakterienresistenz kann beispielsweise die üblicherweise zur Neutralisation des Bindemittels eingesetzte Milchsäure durch biologisch weniger leicht abbaubare Säuren, wie z.B. Essigsäure, Ameisensäure oder anorganische Säuren, ersetzt werden. Oftmals reicht dieser Säureaustausch zur Beseitigung der durch den Bakterien- bzw. Pilzbefall verursachten Probleme jedoch nicht aus.

Es können ferner den Elektrotauchlacken biozide Additive, wie z.B. Formaldehyd oder Isothiazolinone, zugesetzt werden. Ferner besteht auch die Möglichkeit, bakterizide Strukturen in die eingesetzten Bindemittel einzubauen.

Die Modifizierung der Bindemittel zur Erzielung der bakteriziden bzw. fungiziden Wirkung kann jedoch ebenso wie der Zusatz biozider Additive eine Verschlechterung anderer Eigenschaften der Elektrotauchlacke zur Folge haben. Außerdem kann es beispielsweise leicht zum Befall des Elektrotauchlackes mit Bakterien oder Pilzen kommen, die gegen die modifizierten Bindemittel resistent sind. Die dann erforderliche Anpassung der Bindemittel an diese neu aufgetretenen Bakterien bzw. Pilze ist zeit- und kostenintensiv.

Aus der DE-A-27 51 498 ist es nun bekannt, kathodisch abscheidbaren Elektrotauchlacken zur Vermeidung der Anodenkorrosion Nitrat- oder Nitrit-Ionen in Form von Salzen zuzusetzen. Hierfür werden in der Regel die entsprechenden Alkali- oder Erdalkalisalze eingesetzt. Es ist in der DE-A-27 51 498 aber auch beschrieben, den Elektrotauchlacken zu diesem Zweck Silbernitrat oder Silbernitrit zuzusetzen, da dies gleichzeitig zu einer Bindung der löslichen Chloridionen durch Ausfällung von Silberchlorid führt. Gemäß DE-A-27 51 498 werden die Nitrat- und/oder Nitrit-Ionen in einer Menge von 5 bis 4.000 mg/Liter Elektrotauchlack, entsprechend einer etwa doppelt so hohen Silberionenkonzentration, eingesetzt.

Aus der DE-A-24 57 437 ist es weiterhin bekannt, kathodisch abscheidbaren Elektrotauchlacken zur Verbesserung des Korrosionsschutzes und der Haftung auf der Metalloberfläche Metallionen in Form von gelösten Metallsalzen zuzusetzen. Als Beispiele für geeignete Metallionen werden in der DE-A-24 57 437 Silber- sowie Kupfer-, Kobalt-, Cadmium-, Nickel-, Zinn- und Antimon-Ionen genannt. Der Metallionengehalt der Elektrotauchlacke beträgt dabei zwischen 1 und 2000 ppm, bezogen auf den im Elektrotauchlack anwesenden kationischen Filmbildner.

In der DE-A-24 57 437 und in der DE-A-27 51 498 ist aber das Problem des Bakterienbefalls der Elektrotauchlacke sowie die biozide Wirkung von Silberionen in Elektrotauchlacken nicht beschrieben. Ferner zeichnen sich die in beiden Schriften beschriebenen Elektrotauchlacke durch einen sehr hohen Gehalt an organischen Lösemitteln von ca. 7 Gew.-%, bezogen auf das Gesamtgewicht des Elektrotauchlackes, aus. Darüber hinaus enthalten die in diesen Schriften beschriebenen Elektrotauchlacke Formaldehyd. Aufgrund dieses Formaldehydgehaltes und hohen Lösemittelgehaltes sind im allgemeinen Probleme mit einem Bakterien- bzw. Pilzbefall dieser Elektrotauchlacke nicht zu erwarten.

Aus der US 5,366,004 ist es bekannt, Metalle (Silber) dazu zu verwenden, die Umgebung, in diesem Falle Kondenswasser, von beschichteten Substraten keimfrei zu halten oder zu entkeimen. Dazu werden mindestens zwei Prozent Metall in den ausgehärteten Beschichtungen eingesetzt. Das Problem des Bakterienbefalls von Elektrotauchlacken wird in dieser Schrift nicht erkannt.

Der vorliegenden Erfindung liegt somit die Aufgabe zugrunde, die in Verfahren zur elektrophoretischen Beschichtung eingesetzten wäßrigen Komponenten, wie z.B. die Elektrotauchlacke, Anolyte, Kompensat etc., bakterien- bzw. pilzresistent auszustatten. Gleichzeitig sollte gewährleistet sein, daß die übrigen Eigenschaften der wäßrigen Elektrotauchlacke im Vergleich zu den Eigenschaften der entsprechenden, nicht modifizierten Elektrotauchlacke nicht oder nur geringfügig verschlechtert werden.

Diese Aufgabe wird überraschenderweise durch wäßrige Elektrotauchlakke auf der Basis wäßriger Bindemittellösungen und/oder Dispersionen mit einem Gehalt an Silberionen und/oder elementarem Silber gelöst. Diese Elektrotauchlacke sind dadurch gekennzeichnet, daß sie einen Gehalt an organischen Lösemitteln von weniger als 5 Gew,-%, bezogen auf das Gesamtgewicht des Elektrotauchlacks, aufweisen und daß sie die Silberionen und/oder das elementare Silber in einer Konzentration von 0,1 bis 20 mg, bevorzugt von mehr als 1 bis weniger als 10 mg, besonders bevorzugt 2 bis 7 mg, jeweils pro kg des Elektrotauchlackes enthält

Gegenstand der vorliegenden Erfindung ist ferner ein Verfahren zur Herstellung der Elektrotauchlacke, ihre Verwendung in Verfahren zur Beschichtung elektrisch leitfähiger Substrate sowie die Verwendung von Silberionen und/oder elementarem Silber als Biozid in wäßrigen Komponenten, die in Verfahren zur elektrophoretischen Beschichtung eingesetzt werden.

Es ist angesichts der Vielzahl bekannter Bakterizide bzw. Fungizide überraschend und war nicht vorhersehbar, daß gerade durch die Verwendung von Silberionen in Form gelöster Silbersalze und/oder von elementarem Silber als Biozid Elekrotauchlacke erhalten werden, die eine sehr gute Bakterienresistenz bzw. Pilzresistenz aufweisen und bei denen die anderen Eigenschaften durch diesen Zusatz der Silberionen bzw. des Silbers nicht verschlechtert werden.

Außerdem ist es überraschend, daß bereits mit sehr niedrigen Silberkonzentrationen bzw. Silberionenkonzentrationen von 0,1 bis 20 ppm, bezogen auf das Gesamtgewicht des Elektrotauchlackes, eine ausreichende biozide Wirkung erzielt werden kann, da andere Biozide in Elektrotauchlacken in wesentlich höheren Konzentrationen eingesetzt werden müssen. Außerdem werden Silbersalze (z.B. Silbernitrat) für andere Anwendungszwecke, wie die Vermeidung von Anodenkorrosion oder die Verbesserung des Korrossionsschutzes, in Elektrotauchlacken i. a. in wesentlichen höheren Konzentrationen eingesetzt. Selbstverständlich können aber die Silberionen auch in einer wesentlich höheren Konzentration als Biozid in den in Rede stehenden Elektrotauchlacken eingesetzt werden. Insbesondere eignen sich dabei die Silberionen bzw. das Silber als Additiv fur Elektrotauchlacke mit einem nur sehr geringen Lösemittelgehalt.

Die Silberionen und/oder das Silber können als Biozid in allen an sich bekannten wäßrigen Elektrotauchlacken eingesetzt werden. Als Elektrotauchlacke kommen daher sowohl an der Anode abscheidbare Elektrotauchlacke, bevorzugt aber an der Kathode abscheidbare Elektrotauchlacke in Betracht. Die Elektrotauchlacke können neben den üblicherweise eingesetzen Bindemitteln (in Form wäßriger Dispersionen und/oder Lösungen) und ggf. Vernetzern auch noch die üblicherweise eingesetzten Pigmente und/oder Füllstoffe sowie ggf. weitere Additive und/oder Katalysatoren enthalten.

Beispiele für erfindungsgemäß einsetzbare anionische Gruppen enthaltende anodisch abscheidbare Elektrotauchlack-Bindemittel und Lacke (ATL) sind bekannt und beispielsweise in der DE-A-28 24 418 beschrieben. Es handelt sich beispielsweise um Bindemittel auf Basis von Polyestern, Epoxidharzestern, Poly(meth)acrylaten, Maleinatölen oder Polybutadienölen. Die Bindemittel tragen beispielsweise -COOH, -SO3H und/oder PO3H2-Gruppen. Die Harze können nach Neutralisation von mindestens einem Teil der sauren Gruppen in die Wasserphase überführt werden. Die Lacke können auch üblicherweise eingesetzte Vernetzer, z.B. Triazinharze, Vernetzer mit umesterungsfähigen und/oder umamidierungsfähigen Gruppen oder blockierte Polyisocyanate, enthalten.

Die kathodisch abscheidbaren Elektrotauchlacke können als kathodisch abscheidbare Kunstharze im Prinzip jedes fur wäßrige Elektrotauchlacke geeignete wäßrige kathodisch abscheidbare Kunstharz enthalten. Beispiele für in KTL - Lacken einsetzbare Bindemittel und Vernetzer sind in der EP-A-82 291, der EP-A-234 395, der EP-A-209 857, der EP-A-227 975, der EP-A-178 531, der EP-A-333 327, der EP-A-310 971, der EP-A-456 270, der EP-A-261 385, der EP-A-245 786, der EP-A-414 199, der EP-A-476 514, der DE-A- 33 24 211 und der US-A-3,922 253 beschrieben.

Diese Elektrotauchlacke enthalten vorzugsweise kationische, aminmodifizierte Epoxidharze als kathodisch abscheidbare Kunstharze. Derartige Kunstharze sind bekannt und werden beispielsweise in der DE-A-35 18 770, DE-A-35 18 732, EP-B-102 501, DE-A-27 01 002, US-A-4,104,147, EP-A-4090, EP-A-12 463, US-A-4, 031, 050, US-A-3,922,253, US-A-4, 101, 486, US-A-4, 038, 232 und US-A-4,017,438 beschrieben. In diesen Patentdokumenten wird auch die Herstellung von kationischen, aminmodifizierten Epoxidharzen ausführlich beschrieben.

Unter kationischen, aminmodifizierte Epoxidharzen werden kationische Reaktionsprodukte aus
(α) ggf. modifizierten Polyepoxiden und
(β) Aminen und ggf.
(γ) Polyolen, Polycarbonsäuren, Polyaminen oder Polysulfiden
verstanden. Diese kationischen, aminmodifizierten Epoxidharze können durch Umsetzung der Komponenten (α), (β) und ggf. (γ) sowie - falls notwendig - anschließender Protonierung hergestellt werden. Es ist aber auch möglich, ein unmodifiziertes Polyepoxid mit einem Amin umzusetzen und an dem so erhaltenen aminmodifizierten Epoxidharz weitere Modifizierungen durchzuführen.

Unter Polyepoxiden werden Verbindungen verstanden, die zwei oder mehr Epoxidgruppen im Molekül enthalten.

Besonders bevorzugte (α)-Komponenten sind Verbindungen, die herstellbar sind durch Umsetzung von
(i) einer Diepoxidverbindung oder eines Gemisches von Diepoxidverbindungen mit einem Epoxidäquivalentgewicht unter 2000 mit
(ii) einer unter den gegebenen Reaktionsbedingungen gegenüber Epoxidgruppen monofunktionell reagierenden, eine Phenol- oder Thiolgruppe enthaltenden Verbindung oder eines Gemisches solcher Verbindungen,
wobei die Komponenten (i) und (ii) in einem Molverhältnis von 10 : 1 bis 1 : 1, bevorzugt 4 : 1 bis 1,5 : 1, eingesetzt werden und die Umsetzung der Komponente (i) mit der Komponente (ii) bei 100 bis 190 °C, gegebenenfalls in Anwesenheit eines Katalysators, durchgeführt wird (vgl. DE-A-35 18 770).

Weitere besonders bevorzugte (α)-Komponenten sind Verbindungen, die herstellbar sind durch eine bei 100 bis 195 °C, gegebenenfalls in Anwesenheit eines Katalysators durchgeführte, durch einen monofunktionell reagierenden Starter, der entweder eine alkoholische OH-Gruppe, eine phenolische OH-Gruppe oder eine SH-Gruppe trägt, initiierte Polyaddition einer Diepoxidverbindung und/oder eines Gemisches von Diepoxidverbindungen, gegebenenfalls zusammen mit mindestens einer Monoepoxidverbindung, zu einem Epoxidharz, in dem Diepoxidverbindung und Starter in einem Molverhältnis von größer 2 : 1 bis 10 : 1 eingebaut sind (vgl. DE-A- 35 18 732).

Polyepoxide, die zur Herstellung der besonders bevorzugten (α)-Komponenten und auch selbst als (α)-Komponenten einsetzbar sind, sind aus Polyphenolen und Epihalohydrinen hergestellte Polyglycidylether von Polyphenolen. Als Polyphenole können z.B. ganz besonders bevorzugt Bisphenol A und Bisphenol F eingesetzt werden. Außerdem sind auch 4,4'-Dihydroxybenzophenon, Bis(4-hydroxyphenyl)1,1-ethan, Bis-(4-hydroxyphenyl)-1,1-isobutan, Bis-(4-hydroxy-tertiär-butylphenyl)-2,2-propan, Bis-(2-hydroxynaphthyl)-methan, 1,5-Dihydroxynaphthalin und phenolische Novolakharze geeignet.

Weitere geeignete Polyepoxide sind Polyglycidylether von mehrwertigen Alkoholen, wie z.B. Ethylenglykol, Diethylenglykol, Triethylenglykol, 1,2-Propylenglykol, 1,4-Propylenglykol, 1,5-Pentandiol, 1,2,6-Hexantriol, Glycerin und Bis-(4-hydroxycyclohexyl)-2,2-propan. Es können auch Polyglycidylester von Polycarbonsäuren, wie z.B. Oxalsäure, Bernsteinsäure, Glutarsäure, Terephthalsäure, 2,6-Naphthalindicarbonsäure und dimerisierte Linolsäure eingesetzt werden. Typische Beispiele sind Glycidyladipat und Glycidylphthalat.

Ferner sind Hydantoinepoxide, epoxidiertes Polybutadien und Polyepoxidverbindungen geeignet, die man durch Epoxidierung einer olefinisch ungesättigten aliphatischen Verbindung erhält.

Unter modifizierten Polyepoxiden werden Polyepoxide verstanden, in denen wenigstens ein Teil der reaktionsfähigen Gruppen mit einer modifizierenden Verbindung umgesetzt worden ist.

Als Beispiele für modifizierende Verbindungen werden genannt:
- Carboxylgruppenhaltige Verbindungen, wie gesättigte oder ungesättigte Monocarbonsäuren (z.B. Benzoesäure, Leinölfettsäure, 2-Ethylhexansäure, Versaticsäure), aliphatische, cycloaliphatische und/oder aromatische Dicarbonsäuren verschiedener Kettenlänge (z.B. Adipinsäure, Sebacinsäure, Isophthalsäure oder dimere Fettsäuren), Hydroxyalkylcarbonsäuren (z.B. Milchsäure, Dimethylolpropionsäure) sowie carboxylgruppenhaltige Polyester oder
- aminogruppenhaltige Verbindungen, wie Diethylamin oder Ethylhexylamin oder Diamine mit sekundären Aminogruppen, z.B. N,N'-Dialkylalkylendiamine, wie Dimethylethylendiamin, N,N'-Dialkyl-polyoxyalkylenamine, wie N,N'-Dimethylpolyoxypropylendiamin, cyanalkylierte Alkylendiamine, wie Bis-N,N'-Cyanethyl-ethylendiamin, cyanalkylierte Polyoxyalkylenamine, wie Bis-N,N'-Cyanethylpolyoxypropylendiamin, Polyaminoamide, wie z.B. Versamide, insbesondere endständige Aminogruppen enthaltende Umsetzungsprodukte aus Diaminen (z.B. Hexamethylendiamin), Polycarbonsäuren, insbesondere Dimerfettsäuren und Monocarbonsäuren, insbesondere Fettsäuren oder das Umsetzungsprodukt von einem Mol Diaminohexan mit zwei Molen Monoglycidylether oder Monoglycidylester, speziell Glycidylester verzweigter Fettsäuren, wie der Versaticsäure, oder
- hydroxylgruppenhaltige Verbindungen, wie Neopentylglykol, bisethoxyliertes Neopentylglykol, Hydroxypivalinsäureneopentylglykolester, Dimethylhydantoin-N,N'-diethanol, Hexandiol-1,6, Hexandiol-2,5, 1,4-Bis-(hydroxy-methyl)cyclohexan, 1,1-Isopropyliden-bis-(p-phenoxy)-2-propanol, Trimethylolpropan, Pentaerythrit oder Aminoalkohole, wie Triethanolamin, Methyldiethanolamin oder hydroxylgruppenhaltige Alkylketimine, wie Aminomethylpropandiol-1,3-methylisobutylketimin oder Tris-(hydroximethyl)-aminomethancyclohexanonketimin sowie auch Polyglykolether, Polyesterpolyole, Polyetherpolyole, Polycaprolactonpolyole, Polycaprolactampolyole verschiedener Funktionalität und Molekulargewichte oder
- gesättigte oder ungesättigter Fettsäuremethylester, die in Gegenwart von Natriummethylat mit Hydroxylgruppen der Epoxidharze umgeestert werden.

Als Komponente (β) können primäre und/oder sekundäre Amine eingesetzt werden.

Bevorzugt sollte das Amin eine in Wasser lösliche Verbindung sein. Beispiele solcher Amine sind Mono- und Dialkylamine, wie Methylamin, Ethylamin, Propylamin, Butylamin, Dimethylamin, Diethylamin, Dipropylamin, Methylbutylamin und dgl. Geeignet sind ebenfalls Alkanolamine, wie z.B. Methylethanolamin, Diethanolamin und dgl. Ferner sind Dialkylaminoalkylamine, wie z.B. Dimethylaminoethylamin, Diethylaminopropylamin, Dimethylaminopropylamin und dgl. geeignet. Es können auch ketimingruppenhaltige Amine, wie z.B. das Methylisobutyldiketimin von Diethylentriamin eingesetzt werden. In den meisten Fällen werden niedermolekulare Amine verwendet, doch ist es auch möglich, höhermolekulare Monoamine anzuwenden.

Die Amine können auch noch andere Gruppen enthalten, doch sollen diese die Umsetzung des Amins mit der Epoxidgruppe nicht storen und auch nicht zu einer Gelierung der Reaktionsmischung führen.

Bevorzugt werden sekundäre Amine als (β)-Komponente eingesetzt.

Die für die Wasserverdünnbarkeit und elektrische Abscheidung erforderlichen Ladungen können durch Protonierung mit wasserlöslichen Säuren (z.B. Borsäure, Ameisensäure, Milchsäure, bevorzugt Essigsäure) erzeugt werden. Eine weitere Möglichkeit zur Einführung kationischer Gruppen besteht in der Umsetzung von Epoxidgruppen der Komponente (α) mit Aminsalzen.

Als Komponente (γ) werden Polyole, Polycarbonsäuren, Polyamine oder Polysulfide bzw. Gemische dieser Stoffklassen eingesetzt. Die in Betracht kommenden Polyole schließen Diole, Triole und höhere polymere Polyole, wie Polyesterpolyole und Polyetherpolyole, ein. Bezüglich weiterer Einzelheiten und weiterer Beispiele geeigneter Komponenten (γ) sei auf die EP-B2-301 293, insbesondere auf Seite 4, Zeile 31, bis Seite 6, Zeile 27, verwiesen.

Die in den Elektrotauchlacken enthaltenen kathodisch abscheidbaren Kunstharze sind in der Regel entweder selbstvernetzend und/oder werden mit einem Vernetzungsmittel oder einer Mischung aus Vernetzungsmitteln kombiniert.

Selbstvernetzbare Kunstharze sind erhältlich, indem in die Kunstharzmoleküle reaktive Gruppen eingeführt werden, die unter Einbrennbedingungen miteinander reagieren. Beispielsweise können in hydroxyl- und/oder aminogruppenhaltige Kunstharze blockierte Isocyanatgruppen eingeführt werden, die unter Einbrennbedingungen deblockieren und unter Ausbildung von vernetzten Lackfilmen mit den Hydroxyl- bzw. Aminogruppen reagieren. Selbstvernetzbare Kunstharze können beispielsweise durch Umsetzung eines hydroxyl- und/oder aminogruppenhaltigen Kunstharzes mit einem teilblockierten Polyisocyanat, das im statistischen Mittel eine freie NCO-Gruppe pro Molekül enthält, erhalten werden.

Die Elektrotauchlacke können im Prinzip alle für Elektrotauchlacke geeigneten Vernetzungsmittel, wie z.B. Phenoplaste, polyfunktionelle Mannichbasen, Melaminharze, Benzoguanaminharze, blockierte Polyisocyanate und aktivierte Estergruppen enthaltende Verbindungen enthalten. Die Elektrotauchlacke enthalten vorzugsweise blockierte Polyisocyanate als Vernetzungsmittel. Der Einsatz blockierter Polyisocyanate in kathodisch abscheidbare Kunstharze enthaltenden Elektrotauchlacken ist schon lange bekannt und unter anderem auch in den oben zitierten Patentdokumenten, beispielsweise in der EP-B2-301 293, Seite 6, Zeile 38, bis Seite 7, Zeile 21, ausführlich beschrieben.

Die erfindungsgemäßen Elektrotauchlacke werden nach allgemein gut bekannten Methoden hergestellt. Die Synthese der kathodisch abscheidbaren Bindemittel erfolgt nach gut bekannten Methoden (vgl. z.B. DE-C-27 01 002 u.ä.) in organischen Lösemitteln. Die so erhaltenen Bindemittel-Lösungen bzw. Dispersionen werden in neutralisierter Form in eine wäßrige Phase überführt.

Im Rahmen der vorliegenden Erfindung werden die Silberionen üblicherweise in Form eines Silbersalzes und/oder eines Silberkomplexes, bevorzugt in Form eines (löslichen) Silbersalzes, in den Elektrotauchlacken eingesetzt. Die Silberionen werden dabei bevorzugt in Form einer wäßrigen Lösung des entsprechenden Salzes bzw. Komplexes eingearbeitet. In der Regel werden dabei solche Silbersalze eingesetzt, die leicht zugänglich sind. Als Beispiele für geeignete Silbersalze seien Silbernitrat, Silbersulfat, Silbernitrit und Silbersalze organischer Säuren, wie z.B. Silberacetat, genannt. Es ist aber auch der Einsatz von Silberkomplexen denkbar. Dabei ist es im allgemeinen für die biozide Wirkung unschädlich, wenn nach Zusatz solcher Silbersalze das Silber als unlösliches Salz (z.B. Silberchlorid) oder als elementares Silber ausfällt. Schließlich ist es auch möglich, das Silber in Form schwerlöslicher Salze, wie z.B. Silberchlorid, oder in Form von Vermengungen von Silbersalzen, wie z.B. Silberchlorid, mit Pigmenten, wie z.B. Titandioxid, einzusetzen. Hierbei gehen zwar nur geringe Mengen als Silberionen in Lösung (z.B. im ppb-Bereich), aber es wird auch in diesem Fall eine ausreichende biozide Wirkung erzielt.

Um einen wirkungsvollen bioziden Effekt zu erzielen, genügen schon sehr geringe Mengen an Silberionen und/oder elementarem Silber. Das Silber bzw. die Silberionen werden in den Elektrotauchlacken daher in einer Menge von 0,1 bis 20 ppm, bevorzugt von mehr als 1 ppm bis weniger als 10 ppm, und besonders bevorzugt 2 bis 7 ppm, jeweils bezogen auf das Gesamtgewicht des Elektrotauchlackes, eingesetzt. Dies bedeutet, daß je 1000 g Elektrotauchlack nur Mengen zwischen 0,1 und 20 mg, bevorzugt zwischen mehr als 1 und weniger als 10 mg, und besonders bevorzugt 2 bis 7 mg an Silberionen und/oder Silber in dem Elektrotauchlack enthalten sind.

Das Silber und/oder die Silberionen können auf verschiedenste Weisen in den Elektrotauchlack eingearbeitet werden. Insbesondere ist es möglich, das Silber bzw. die Silberionen in die wäßrige Bindemittel-Lösung und/oder Bindemittel-Dispersion und/oder in die Pigmentpaste und/oder in den wäßrigen Elektrotauchlack selbst einzuarbeiten. Bevorzugt erfolgt dabei die Einarbeitung in Form einer wäßrigen Silbersalzlösung. Es ist aber auch möglich, das Silber bzw. die Silberionen in Form eines pulverförmigen Silbersalzes bzw. Silberkomplexes einzuarbeiten.

Verfahrenstechnisch ist der Prozeß der Elektrotauchlackierung im allgemeinen mit einem Ultrafiltrationsprozeß gekoppelt. Es ist dabei auch möglich, dem Rezirkulat, dem Anolyt, dem Kompensat und/oder dem Ultrafiltrat Silber bzw. Silberionen zuzusetzen. Selbstverständlich wird durch die Einarbeitung der Silberionen in die Bindemittel-Lösung bzw. -Dispersion, den Anolyt, das Kompensat, das Rezikulat bzw. das Ultrafiltrat auch eine Bakterien- bzw. Pilzresistenz dieser Komponenten selbst und nicht nur des resultierenden Elektrotauchlacks, erreicht.

Die Menge an Silbersalz bzw. Silberkomplex etc. wird dabei unabhängig von der Art der Einarbeitung im allgemeinen so gewählt, daß der resultierende Elektrotauchlack die gewünschten Mengen an Silber bzw. Silberionen aufweist. Es ist aber auch möglich, den Silber- bzw. Silberionengehalt der einzelnen Komponenten des Elektrotauchlackes jeweils individuell und unabhängig voneinander einzustellen. Falls nur eine Resistenz der einzelnen Komponenten (z.B. Bindemittel-Dispersion, Pigmentpaste, Anolyt, Kompensat, Rezirkulat etc.) der Elektrotauchlacke gewünscht ist, kann das Silber bzw. die Silberionen daher beispielsweise in einer Menge zwischen 0,1 und 20 ppm, bevorzugt mehr als 1 bis weniger als 10 und ganz besonders bevorzugt 2 bis 7 ppm, bezogen auf das Gewicht der jeweiligen Komponente, eingesetzt werden.

Bevorzugt werden die Silberionen bzw. das Silber in lösemittelarmen Elektrotauchlacken eingesetzt. Im Rahmen der vorliegenden Anmeldung werden darunter Elektrotauchlacke verstanden, die weniger als 5 Gew.-%, bevorzugt weniger als 2 Gew.-%, jeweils bezogen auf das Gesamtgewicht des, Elektrotauchlackes, organische Lösemittel enthalten.

Als Beispiele für geeignete Lösemittel seien aromatische Kohlenwasserstoffe, wie z.B. Xylol, sowie Alkohole, Glykolether und Ketone, wie z.B. sec.-Butanol, n-Butanol, Butylglykol, Butyldiglykol, Propylenglykolmonophenylether, Methoxypropanol, Ethylglykol, Ethoxypropanol, Butoxypropanol und Methylisobutylketon genannt.

Die erfindungsmäßen wäßrigen Elektrotauchlacke können neben den oben beschriebenen Komponenten auch noch weitere übliche Lackbestandteile wie z.B. Pigmente, Füllstoffe, Netzmittel, Verlaufsmittel, Polymermikroteilchen, Antischaummittel, Antikrateradditive, Katalysatoren usw. enthalten.

Der Feststoffgehalt der erfindungsgemäßen Elektrotauchlacke beträgt im allgemeinen 5 bis 40, vorzugsweise 10 bis 30, besonders bevorzugt 15 bis 25 Gewichtsprozent.

Der nichtflüchtige Anteil der erfindungsgemäßen Elektrotauchlacke besteht üblicherweise zu 20 bis 100 Gew.-%, bevorzugt 40 bis 80 Gew.-%, aus einem elektrophoretisch abscheidbaren Bindemittel oder einer Mischung aus elektrophoretisch abscheidbaren Bindemitteln, zu 0 bis 50 Gew.-%, bevorzugt 10 bis 40 Gew.-%, aus einem Vernetzungsmittel oder einer Mischung aus verschiedenen Vernetzungsmitteln sowie zu 0 bis 50 Gew.-%, bevorzugt 10 bis 30 Gew.-%, aus Pigmenten und/oder Füllstoffen.

Pigmente werden bevorzugt in Form einer Pigmentpaste in die wäßrige Bindemittel-Lösung oder Bindemittel-Dispersion eingearbeitet. Die Herstellung von Pigmentpasten ist allgemein bekannt und braucht hier nicht näher erläutert zu werden (vgl. D.H. Parker, Principles of Surface Coating Technology, Intersience Publishers, New York (1965) etc.).

Zur Herstellung der Pigmentpasten werden z.B. quaternäre Ammoniumgruppen enthaltende Epoxid-Aminaddukte eingesetzt. Beispiele für geeignete Harze sind auch z.B. in der EP-A-183 025 und der EP-A-469 497 beschrieben.

Die Pigmentpasten können im Prinzip alle für Elektrotauchlacke geeigneten Pigmente und/oder Füllstoffe enthalten, wie z.B. Titandioxid, Zinkoxid, Antimonoxid, Zirkonoxid, Bleisulfat, Bleicarbonat, Bariumcarbonat, Porzellan, Ton, Kaliumcarbonat, Aluminiumsilikat, Siliciumdioxid, Magnesiumcarbonat und Magnesiumsilikat, Cadmiumgelb, Cadmiumrot, Ruß, Phthalocyaninblau, Chromgelb, Toluidylrot und Eisenoxide sowie Korrosionsschutzpigmente, wie z.B. Zinkphosphat, Bleisilikat, oder organische Korrosionsinhibitoren.

Ferner können die Elektrotauchlacke auch übliche Additive, wie z.B. die in der EP-B2-301 293 beschriebenen Homo- oder Copolymere eines Alkylvinylethers (vgl. EP-B2-301 293, Seite 7, Zeilen 21 bis 51), Polymermikroteilchen, Antikratermittel, Netzmittel, Verlaufsmittel, Antischaummittel, Katalysatoren u.ä. in üblichen Mengen, bevorzugt in Mengen von 0,001 bis 5 Gew.-%, bezogen auf das Gesamtgewicht des Elektrotauchlackes, enthalten.

Die erfindungsgemäßen Elektrotauchlacke werden in Verfahren zum Lackieren elektrisch leitfähiger Substrate eingesetzt, bei dem
(1) das elektrisch leitfähige Substrat in einen wäßrigen Elektrotauchlack getaucht wird,
(2) das Substrat als eine Elektrode geschaltet wird,
(3) durch Gleichstrom ein Film auf dem Substrat abgeschieden wird,
(4) das lackierte Substrat aus dem Elektrotauchlack entfernt wird und
(5) der abgeschiedene Lackfilm eingebrannt wird.

Das obenbeschriebene Verfahren ist bekannt und wird schon seit mehreren Jahren im großen Umfang eingesetzt (vergleiche auch die oben zitierten Patentdokumente). Die angelegte Spannung kann in einem großen Bereich schwanken und kann zum Beispiel zwischen 2 und 1000 V liegen. Typischerweise wird aber mit Spannungen zwischen 5o und 500 V gearbeitet. Die Stromdichte liegt in der Regel zwischen etwa 10 und 100 A/m². Im Verlauf der Abscheidung neigt die Stromdichte zum Abfallen. Sobald der Lackfilm auf dem Substrat abgeschieden ist, wird das lackierte Substrat aus dem Elektrotauchlack entfernt und abgespült. Danach wird der abgeschiedene Lackfilm eingebrannt. Die Einbrenntemperaturen liegen üblicherweise bei 130 bis 200 °C, vorzugsweise bei 150 bis 180 °C und die Einbrenndauer liegt im allgemeinen zwischen 10 und 60 min, vorzugsweise zwischen 15 und 30 min.

Mit dem obenbeschriebenen Verfahren können im Prinzip alle elektrisch leitfähigen Substrate lackiert werden. Als Beispiele für elektrisch leitfähige Substrate werden insbesondere Substrate aus Metall, wie Stahl, Aluminium, Kupfer und dergleichen, genannt. Ggf. können aber auch andere Substrate, wie z.B. Kunststoffe, beschichtet werden. Insbesondere werden erfindungsgemäß Kraftfahrzeugkarosserien und deren Teile sowie Teile im Bereich der Industrielackierung, wie z.B. Räder, Heizkörper etc., mit den in Rede stehenden Elektrotauchlacken beschichtet. Die Elektrotauchlacke werden i.a. zur Grundierung im Rahmen einer Mehrschichtlackierung (Industrie und Kraftfahrzeugbereich) oder als Einschichtlackierung (Industriebereich) eingesetzt.

Die Erfindung wird nun anhand von Ausführungsbeispielen näher erläutert. Alle Angaben über Teile und Prozente sind dabei Gewichtsangaben, falls nicht ausdrücklich etwas anderes festgestellt wird.

### Beispiel 1

### 1.1. Herstellung des Vernetzungsmittels V1

In einem Reaktor werden 10462 Teile Isomere und höherfunktionelle Oligomere auf Basis von 4,4'-Diphenylmethandiisocyanat mit einem NCO-Equivalentgewicht von 135 g/eq (Lupranat^{R} M20S der Fa. BASF AG; NCO-Funktionalität ca. 2,7; Gehalt an 2,2'- und 2,4'-Diphenylmethandiisocyanat unter 5%) unter Stickstoffatmosphäre vorgelegt. Man gibt 20 Teile Dibutylzinndilaurat zu und tropft 9626 Teile Butyldiglykol so zu, daß die Produkttemperatur unter 60 °C bleibt. Nach Ende der Zugabe wird die Temperatur weitere 60 Minuten bei 60 °C gehalten und ein NCO-Equivalentgewicht von 1120 g/eq bestimmt (bezogen auf Festanteile). Nach Anlösung in 7737 Teilen Methylisobutylketon und Zugabe von 24 Teilen Dibutylzinndilaurat werden 867 Teile geschmolzenes Trimethylolpropan so zugegeben, daß eine Produkttemperatur von 100 °C nicht überschritten wird. Nach Zugabeende läßt man weitere 60 Minuten nachreagieren. Bei der nachfolgenden Kontrolle sind keine NCO-Gruppen mehr nachweisbar. Man kühlt auf 65 °C ab und verdünnt gleichzeitig mit 963 Teilen n-Butanol und 300 Teilen Methylisobutylketon. Der Feststoffgehalt liegt bei 70,1 % (1 Std. bei 130 °C).

### 1.2. Herstellung eines Vorprodukts (AV1) der Aminkomponente für ein Elektrotauchlack-Bindemittel 1

Aus einer 70%-igen Lösung von Diethylentriamin in Methylisobutylketon wird bei 110 bis 140 °C das Reaktionswasser entfernt. Anschließend wird mit Methylisobutylketon verdünnt, bis die Lösung ein Aminequivalentgewicht von 131 g/eq aufweist.

### 1.3. Herstellung der Bindemittel-Dispersion 1

In einem Reaktor werden 5797 Teile Epoxidharz auf Basis von Bisphenol A mit einem Epoxy-Equivalentgewicht (EEW) von 188 g/eq zusammen mit 1320 Teilen Bisphenol A, 316 Teilen Dodecylphenol, 391 Teilen p-Kresol und 413 Teilen Xylol unter Stickstoffatomsphäre auf 125 °C aufgeheizt und 10 Minuten gerührt. Anschließend heizt man auf 130 °C und gibt 22 Teile N,N-Dimethylbenzylamin zu. Bei dieser Temperatur wird der Reaktionsansatz gehalten, bis das EEW einen Wert von 814 g/eq erreicht hat.

Man gibt nun 7810 Teile des Vernetzungsmittel (V1) hinzu und hält bei 100 °C. Eine halbe Stunde nach Vernetzerzugabe werden 198 Teile Butylglykol und 1002 Teile sec-Butanol zugesetzt. Unmittelbar anschließend wird eine Mischung von '481 Teilen des Vorprodukts (AV1) und 490 Teilen Methylethanolamin in den Reaktor gegeben und der Ansatz auf 100 °C temperiert. Nach einer weiteren halben Stunde erhöht man die Temperatur auf 105 °C und gibt 150 Teile N,N-Dimethylaminopropylamin zu.

45 Minuten nach Aminzugabe setzt man 879 Teile Plastilit^{R} 3060 (Propylenglykolverbindung, Fa. BASF) und 45 Teile eines üblichen Polyether-Additivs zu, verdünnt mit einem Gemisch von 490 Teilen Propylenglycolphenylether und 196 Teilen sec-Butanol, und kühlt rasch auf 95 °C ab.

Nach 10 Minuten werden 14930 Teile des Reaktionsgemischs in ein Dispergiergefäß überführt. Dort gibt man portionsweise unter Rühren 455 Teile Milchsäure (88 %-ig in Wasser), gelöst in 6993 Teilen Wasser zu. Anschließend wird 20 Minuten homogenisiert, bevor mit weiteren 12600 Teilen Wasser weiter verdünnt wird.

Durch Destillation im Vakuum werden die flüchtigen Lösemittel entfernt und anschließend mengengleich durch Wasser ersetzt.

Zu dieser Bindemittel-Dispersion 1 werden 5 ppm Silberionen, bezogen auf das Gesamtgewicht der Bindemittel-Dispersion, in Form einer wäßrigen 10%igen Silbernitratlösung in entmineralisiertem Wasser zugesetzt.

Die Dispersion 1 besitzt folgende Kennzahlen:

| | |
|---|---|
| Feststoffgehalt | 31,9 % (1 Stunde bei 130 °C) |
| Basengehalt | 0,69 Milliequivalente/g Festkörper |
| Säuregehalt | 0,32 Milliequivalente/g Festkörper |
| pH | 6,2 |
| Teilchengröße | 113 nm |

### 1.4.Herstellung der Pigmentpaste 1

### 1.4.1. Herstellung der Reibharzlosung 1

Gemäß EP 0 505 445 B1 , Beispiel 1.3, wird eine organisch-wäßrige Lösung eines Epoxid-Aminaddukts hergestellt, indem man in einer ersten Stufe 2598 Teile Bisphenol-A-diglycidylether (Epoxy-Equivalentgewicht (EEW) : 188 g/eq), 787 Teile Bisphenol-A, 603 Teile Dodecylphenol und 206 Teile Butylglykol in Gegenwart von 4 Teilen Triphenylphosphin bei 130 °C bis zu einem EEW von 865 g/eq reagieren läßt. Während des Abkühlens wird mit 849 Teilen Butylglykol und 1534 Teilen D.E.R. 732 (Polypropylenglykoldiglycidylether der Fa. DOW Chemical) verdünnt und bei 90 °C mit 266 Teilen 2,2'-Aminoethoxyethanol und 212 Teilen N, N-Dimethylaminopropylamin weiterreagiert. Nach 2 Stunden ist die Viskosität der Harzlosung konstant (5,3 dPas; 40 %-ig in Solvenon^{R} PM (Methoxypropanol der Fa. BASF AG); Platte-Kegel-Viskosimeter bei 23 °C). Man verdünnt mit 1512 Teilen Butylglykol und teilneutralisiert die Basengruppen mit 201 Teilen Eisessig, verdünnt weiter mit 1228 Teilen entionisiertem Wasser und trägt aus. Man erhält so eine 60%-ige wäßrig-organische Harzlösung, deren 10%-ige Verdünnung einen pH von 6,0 aufweist.

Diese Reibharzlösung 1 wird im folgenden zur Pastenherstellung eingesetzt.

### 1.4.2. Herstellung der Pigmentpaste 1

Es werden zunächst 280 Teile Wasser und 250 Teile der obenbeschriebenen Reibharzlösung 1 vorgemischt. Dann werden 5 Teile Ruß, 67 Teile Aluminiumsilikat (Extender ASP 200 der Firma Englehard), 373 Teile Titandioxid (TI-PURE R900, DuPont) und 25 Teile Vernetzungskatalysator (Dibutylzinnoxid) zugefügt und es wird 30 Minuten lang unter einem schnellaufenden Dissolverrührwerk gemischt. Anschließend wird die Mischung in einer Labor-Rührwerksmühle während 1 bis 1,5 h bis zu einer Hegman-Feinheit von 12 µm dispergiert und mit weiterem Wasser ggfs. auf die gewünschte Verarbeitungsviskosität eingestellt.

### 1.5. Herstellung des Elektrotauchlackes 1

Mit der Bindemittel-Dispersion 1 und der Pigmentpaste 1 wird der folgende Elektrotauchlack 1 hergestellt:

| | |
|---|---|
| Bindemittel-Dispersion 1 | 2373g |
| Pigmentpaste 1 | 599g |
| VE-Wasser | 2028g |

Der so erhaltene Elektrotauchlack 1 hat einen Festkörperanteil von ca. 20% mit einem Aschegehalt von 25% und einem Silbergehalt von ca. 2,5 ppm, bezogen auf das Gesamtgewicht des Elektrotauchlackes.

### Beispiel 2

### 2.1. Herstellung des Vernetzungsmittels V2

Der Polyurethanvernetzer wird analog zur Herstellung des Polyurethanvernetzers V1 hergestellt aus Diphenylmethandiisocyanat, wobei von 6 Molen Isocyanat zunächst 4,3 Mole Isocyanat mit 4,3 Molen Butyldiglykol umgesetzt werden und die verbleibenden 1,7 Mole Isocyanat mit Trimethylolpropan umgesetzt werden. Der Vernetzer V2 liegt in einer 80%igen Lösung aus Methylisobutylketon und Isobutanol (Gewichtsverhältnis 9:1) vor.

### 2.2. Herstellung der wäßrigen Bindemittel-Dispersion 2

In einem Reaktor, der mit einem Rührer, Rückflußkühler, Innenthermometer und Inertgasleitung ausgestattet ist, werden 682,4 Teile Epoxidharz auf Basis Bisphenol A mit einem Epoxy-Equivalentgewicht (EEW) von 188 g/eq zusammen mit 198,4 Teilen Bisphenol A, 252,7 Teilen ethoxiliertem Bisphenol A mit einer OH-Zahl von 222 (Dianol 265 der Firma Akzo) und 59,7 Teilen Methylisobutylketon unter Stickstoffatmosphäre auf 130 °C aufgeheizt. Dann werden 1,6 Teile N,N-Dimethylbenzylamin zugegeben, auf 150 °C aufgeheizt und für ca. 30 min bei einer Temperatur zwischen 150 und 190 °C gehalten. Dann wird auf 140 °C heruntergekühlt. Dann werden 2,1 Teile N,N-Dimethylbenzylamin zugegeben und die Temperatur solange gehalten, bis das EEW einen Wert von 1120 g/eq erreicht hat.

Nun gibt man 1011,3 Teile des Vernetzers V2 zu und die Temperatur wird auf 100 °C erniedrigt. Anschließend wird eine Mischung aus 65,4 Teilen Diketimin (erhalten durch Umsetzung von Diethylentriamin und Methylisobutylketon, 75 %ig in Methylisobutylketon) und 59,7 Teilen Methylethanolamin zugegeben und die Reaktionsmischung für ca. 1 h bei 115 °C gehalten, bis eine Viskosität von ca. 6 dPa.s erreicht ist (50 %ige Anlösung in Methoxypropanol, Kegel/Platte-Viskosimeter bei 23 °C). Dann werden 64,8 Teile 1-Phenoxy-2-propanol zugegeben und die Reaktionsmischung wird in einer Mischung aus 60,9 Teilen Milchsäure (88%ig), 15,2 Teilen Emulgatormischung (Mischung aus 1 Teil Butylglykol und 1 Teil eines tertiären Acetylenglykols (Surfynol 104 von Air Products)) und 3026,6 Teilen entmineralisiertem Wasser dispergiert. Durch Destillation im Vakuum werden die flüchtigen Lösemittel entfernt und anschließend mengengleich durch entmineralisiertes Wasser ersetzt. Der Festkörpergehalt beträgt nach der Destillation 37 %, die Dispersion weist eine Teilchengröße von 150 nm auf.

Zu dieser Bindemittel-Dispersion 2 werden 5 ppm Silberionen, bezogen auf das Gesamtgewicht der Bindemittel-Dispersion, in Form einer wäßrigen 10%igen Silbernitratlösung in entmineralisiertem Wasser zugesetzt.

### 2.3. Herstellung eines Sulfoniumreibharzes 1

15,789 Teile Epoxidharz auf Basis Bisphenol A mit einem Epoxy-Equivalentgewicht (EEW) von 188 g/eq, 5,911 Teile Bisphenol A und 0,570 Teile Nonylphenol werden in ein Edelstahlreaktionsgefäß gegeben und unter Rühren aufgeheizt. Bei einer Temperatur von 130 °C werden 0,007 Teile Triphenylphosphin zugegeben und bei 130 °C wird bis zum Erreichen eines EEW von 760 reagieren gelassen. 5,978 Teile 2-Butoxypropanol werden zugegeben und die Temperatur auf 80 °C abgesenkt. Anschließend werden 3,619 Teile Thiodiethanol (50%ig in Wasser) zugegeben und 15 min gerührt. Nach Zugabe von 3,969 Teilen Dimethylolpropionsäure und 0,912 Teilen entmineralisiertem Wasser wird die Säurezahl bestimmt. Die Reaktion ist abgeschlossen, wenn die Säurezahl < 5 ist. Dann werden 63,245 Teile entmineralisiertes Wasser stufenweise zugegeben (Festkörper 60 min 130 °C: 28%).

### 2.4. Herstellung eines Quaternisierungsreagenzes

12,240 Teile Dimethylethanolamin werden mit 45,043 Teilen 2-Ethylhexanol-mono-urethan des Toluylendiisocyanates (90 %ig) versetzt, so daß die Temperatur 70 °C nicht übersteigt. Dann wird mit 13,193 Teilen Butylglykol angelöst und 16,505 Teile Milchsäure (88 %ig) und 13,019 Teile entmineralisiertes Wasser zugegeben. Die Temperatur steigt auf 90 °C. Nach 3 h ist die Reaktion vollständig.

### 2.5. Herstellung eines Reibharzes 2 mit quaternären Ammoniumgruppen

21,073 Teile Epoxidharz auf Basis Bisphenol A mit einem Epoxy-Equivalentgewicht (EEW) von 188 g/eq, 0,770 Teile Xylol und 8,189 Teile Bisphenol A werden in ein Edelstahlreaktionsgefäß gegeben und unter Rühren aufgeheizt. Bei einer Temperatur von 130 °C werden 0,022 Teile Triphenylphosphin zugegeben und bei 180 °C wird bis zum Erreichen eines EEW von 740 reagieren gelassen. Bei einer Temperatur von 125 °C werden 11,679 Teile 2-Ethylhexanol-mono-urethan des Toluylendiisocyanates (90 %ig) zugegeben. Die Temperatur wird ca. 2 h gehalten, bis keine Isocyanatgruppen mehr nachweisbar sind. Nach Anlösen mit 29,359 Teilen Butylglykol wird eine Temperatur von 75 °C eingestellt und 19,189 Teile des obenbeschriebenen Quaternisierungsreagenzes zugegeben. Wenn sich eine Säurezahl kleiner 1 eingestellt hat, wird mit 8,743 Teilen Butylglykol angelöst (Festkörper 60 min 130 °C : 56 %).

### 2.6. Herstellung einer Pigmentpaste 2

| | |
|---|---|
| 12,8 Teile | entmineralisiertes Wasser |
| 28,3 Teile | Sulfoniumreibharz 1 |
| 2,9 Teile | Reibharz 2 |
| 5,0 Teile | Aluminiumsilikat-Extender |
| 1,27 Teile | Ruß |
| 42,2 Teile | Titandioxid (TI-PURE R 900, Du Pont) |
| 25,00 Teile | Dibutylzinnoxid |

Die Komponenten werden nacheinander zu einem schnellaufenden Dissolverrührwerk gegeben und 30 min gemischt. Anschließend wird die Mischung in einer Labor-Rührwerksmühle während 1 - 2 h zu einer Hegman-Feinheit von 12 µm dispergiert und ggf. mit weiterem Wasser auf die gewunschte Verarbeitungsviskosität eingestellt.

### 2.7. Herstellung des Elektrotauchlacks 2

Der Elektrotauchlack wird aus 479 Teilen entmineralisiertem Wasser, 416 Teilen der Bindemittel-Dispersion 2 und 105 Teilen der Pigmentpaste 2 hergestellt. Der so erhaltene Elektrotauchlack weist einen Festkörpergehalt von 20 %, einen Gehalt an organischen Lösemitteln von ca. 1 Gew.-% und einen Gehalt an Silberionen von ca. 2,0 ppm, jeweils bezogen auf das Gesamtgewicht des Elektrotauchlacks, auf.

### Beispiele 3 bis 6

Es wurden analog zu den Bindemittel-Dispersionen 1 und 2 der Beispiele 1 und 2 Bindemittel-Dispersionen 3 bis 6 hergestellt, die sich von den Bindemittel-Dispersionen 1 und 2 nur dadurch unterscheiden, daß ihnen statt 5 ppm Silberionen nun 2 bzw. 1 ppm Silberionen zugesetzt wurden, jeweils bezogen auf das Gesamtgewicht der Bindemittel-Dispersion.

### Vergleichsbeispiele 1 bis 4

Die Vergleichsbeispiele 1 bis 4 unterscheiden sich von den Beispielen 1 bis 6 nur dadurch, daß den Bindemittel-Dispersionen 1 und 2 sowie den Elektrotauchlacken 1 und 2 keine Silberionen zugesetzt wurden.

### Abscheideergebnisse:

Die erfindungsgemäßen Elektrotauchlackbäder 1 und 2 zeigten jeweils im wesentlichen das gleiche Abscheideverhalten (z.B. Verlauf und Kraterbildung) wie die ohne Silberionenzusatz hergestellten Elektrotauchlackbäder der Vergleichsbeispiele.

### Bakterienresistenz:

Die erfindungsgemäßen Elektrotauchlackbäder und die erfindungsgemäßen Bindemittel-Dispersionen wurden ebenso wie die Elektrotauchlacke und die Bindemittel-Dispersionen der Vergleichsbeispiele mit bakterienbelastetem Bindemittel behandelt.

Der Bakterienbefall der Elektrotauchlackbäder/Bindemittel-Dispersionen wurde mit Hilfe der Teströhrchen "Biotest Hycon GK A/HS2 Artikel-Nr. 931 020 der Firma Biotest AG, D-6072 Dreieich, folgendermaßen geprüft:

Zur Herstellung der jeweiligen Prüflösung werden die obenbeschriebene, zu prüfende Bindemittel-Dispersion oder der obenbeschriebene Elektrotauchlacke mit keimfreiem (abgekochtem) vollentsalztem Wasser im Verhältnis Wasser zu Prüflösung von 10 : 1 verdünnt.

Nach Öffnen des Probenröhrchens wird der Teststreifen für ca. 2 - 3 s in die Prüflösung getaucht und dann das Röhrchen wieder verschlossen. Das Probenröhrchen wird anschließend 72 h bei 30 °C bebrütet. Danach wird der Bakterienbefall durch visuelle Prüfung der Teststreifen beurteilt. Die Probe ist in Ordnung, wenn die Zahl der kolonienbildenden Einheiten pro ml (KBE) weniger als 10 2 beträgt, also unterhalb der Nachweisgrenze liegt. Dabei war sowohl bei den Bindemittel-Dispersionen 1 und 2 bei Zusatz von 1, 2 als auch 5 ppm Silberionen, bezogen auf das Gesamtgewicht der Bindemittel-Dispersion, als auch bei den Elektrotauchlacken 1 und 2 bei Zusatz von ca. 2,5 ppm Silberionen, bezogen auf das Gesamtgewicht des Elektrotauchlackes kein Bakterienbefall mehr feststellbar, während die Bindemittel-Dispersionen und die Elektrotauchlacke der Vergleichsbeispiele deutlichen Bakterienbefall (KBE > 10 ³) zeigten.

## Patentansprüche

1. Wäßriger Elektrotauchlack auf der Basis von wäßrigen Bindemittel-Lösungen und/oder -Dispersionen mit einem Gehalt an Silberionen und/oder elementarem Silber, **dadurch gekennzeichnet, daß** er einen Gehalt an organischen Lösemitteln von weniger als 5 Gew.-%, bezogen auf das Gesamtgewicht des Elektrotauchlackes, aufweist und dadurch, daß er die Silberionen und/oder das elementare Silber in einer Konzentration von 0,1 bis 20 mg, bevorzugt von mehr als 1 bis weniger als 10 mg, besonders bevorzugt 2 bis 7 mg, jeweils pro kg des Elektrotauchlackes enthält.

2. Elektrotauchlack nach Anspruch 1, **dadurch gekennzeichnet, daß** das Silber und/oder die Silberionen dem Elektrotauchlack in Form einer wäßrigen Lösung eines Silbersalzes zugesetzt worden sind.

3. Elektrotauchlack nach Anspruch 1 oder 2, **dadurch gekennzeichnet, daß** er kathodisch abscheidbar ist

4. Elektrotauchlack nach einem der Anspruch 1 bis 3, **dadurch gekennzeichnet, daß** der Elektrotauchlack als Bindemittel ein kationisches, aminmodifiziertes Epoxidharz enthält.

5. Verfahren zur Herstellung von Elektrotauchlacken nach einem der Ansprüche 1 bis 4, **dadurch gekennzeichnet, daß** der wäßrigen Bindemittellösung und/oder -dispersion und/oder der Pigmentpaste und/oder dem Elektrotauchlack Silberionen und/oder elementares Silber, bevorzugt in Form einer wäßrigen Silbersalzlösung, zugesetzt werden.

6. Verfahren zum Beschichten elektrisch leitfähiger Substrate, bei dem
1. das Substrat in einen wäßrigen Elektrotauchlack eingetaucht wird,
2. das Substrat als eine Elektrode geschaltet wird,
3. durch Gleichstrom ein Film auf dem Substrat abgeschieden wird,
4. das Substrat aus dem Elektrotauchlackbad entfernt wird und
5. der abgeschiedene Film eingebrannt wird,
**dadurch gekennzeichnet, daß** ein Elektrotauchlack nach einem der Ansprüche 1 bis 4 eingesetzt wird.

7. Verfahren nach Anspruch 6, **dadurch gekennzeichnet, daß** es zur Beschichtung von Kraftfahrzeugkarosserien und deren Teilen zur Grundierung im Rahmen einer Mehrschichtlackierung oder zur Beschichtung von Teilen im Bereich der Industrielackierung zur Grundierung im Rahmen einer Mehrschichtlackierung oder als Einschichtlackierung eingesetzt wird.

8. Verwendung von Silber und/oder Silberionen als Biozid in wäßrigen Komponenten, die in Verfahren zur elektrophoretischen Beschichtung, bevorzugt in Verfahren zur kathodischen Elektrotauchlackierung, eingesetzt werden, **dadurch gekennzeichnet, daß** die Silberionen und/oder das elementare Silber in einer Konzentration von 0,1 bis 20 mg, bevorzugt von mehr als 1 bis weniger als 10 mg, besonders bevorzugt 2 bis 7 mg, jeweils pro kg der wäßrigen Komponente eingesetzt werden.

9. Verwendung nach Anspruch 8, **dadurch gekennzeichnet, daß** das Silber bzw. die Silberionen als biozides Additiv in wäßrigen Lösungen und/oder Dispersionen elektrophoretisch abscheidbarer Kunstharze, in wäßrigen Elektrotauchlakken und/oder Anolyten und/oder Ultrafiltrat und/oder Rezirkulat eingesetzt werden.

10. Verwendung nach Anspruch 8 oder 9, **dadurch gekennzeichnet, daß** die wäßrigen Elektrotauchlacke einen Gehalt an organischen Lösemitteln von weniger als 5 Gew.-%, bezogen auf das Gesamtgewicht des Elektrotauchlackes aufweisen.

## Claims

1. Aqueous electrodeposition coating material based on aqueous binder solutions and/or binder dispersions with a content of silver ions and/or elemental silver, **characterized in that** it has an organic solvent content of less than 5% by weight, based on the overall weight of the electrodeposition coating material, and **in that** it comprises the silver ions and/or the elemental silver in a concentration of from 0.1 to 20 mg, preferably from more than 1 to less than 10 mg, with particular preference from 2 to 7 mg, in each case per kg of the electrodeposition coating material.

2. Electrodeposition coating material according to claim 1, **characterized in that** the silver and/or the silver ions have been added in the form of an aqueous solution of a silver salt to the electrodeposition coating material.

3. Electrodeposition coating material according to claim 1 or 2, **characterized in that** it is cathodically depositable.

4. Electrodeposition coating material according to one of claims 1 to 3, **characterized in that** the electrodeposition material comprises as binder a cationic, amine-modified epoxy resin.

5. Process for the preparation of electrodeposition coating materials according to one of claims 1 to 4, **characterized in that** silver ions and/or elemental silver, preferably in the form of an aqueous silver salt solution, are added to the aqueous binder solution and/or binder dispersion and/or to the pigment paste and/or to the electrodeposition coating material.

6. Method of coating electrically conductive substrates, in which
1. the substrate is immersed in an aqueous electrodeposition coating material,
2. the substrate is connected as one electrode,
3. a film is deposited on the substrate by means of direct current,
4. the substrate is removed from the electrodeposition coating material bath, and
5. the deposited film is stoved,
**characterized in that** an electrodeposition coating material according to one of claims 1 to 5 is employed.

7. Method according to claim 6, **characterized in that** it is employed for coating automobile bodies and parts thereof for priming in the context of a multicoat finish or for coating of parts in the sector of industrial finishing for priming in the context of a multicoat finish or as single-coat finish.

8. Use of silver and/or silver ions as biocide in aqueous components which are employed in methods of electrophoretic coating, preferably in methods of cathodic electrodeposition coating
**characterized in that** the silver ions and/or the elemental silver is or are employed in a concentration of from 0.1 to 20 mg, preferably from more than 1 to less than 10 mg, with particular preference from 2 to 7 mg, in each case per kg of the aqueous component.

9. Use according to claim 8, **characterized in that** the silver and/or the silver ions is or are employed as biocidal additive in aqueous solutions and/or dispersions of electrophoretically depositable synthetic resins, in aqueous electrodeposition coating materials and/or anolytes and/or ultrafiltrate and/or recirculated material.

10. Use according to claim 8 or 9, **characterized in that** the aqueous electrodeposition coating materials have an organic solvent content of less than 5 % by weight, based on the overall weight of the electrodeposition coating material.

## Revendications

1. Peinture à l'eau pour électrodéposition, à base de solutions et/ou de dispersions aqueuses de liant ayant une teneur en ions argent et/ou en argent élémentaire, **caractérisée en ce qu'**elle présente une teneur en solvants organiques de moins de 5% en poids, par rapport au poids total de la peinture pour électrodéposition, et **en ce qu'**elle contient les ions argent et/ou l'ion élémentaire à une concentration de 0,1 à 20 mg, de préférence de plus de 1 à moins de 10 mg, de façon particulièrement préférée, de 2 à 7 mg, dans chaque cas par kg de la peinture pour électrodéposition.

2. Peinture pour électrodéposition selon la revendication 1, **caractérisée en ce que** l'argent et/ou les ions argent ont été ajoutés sous forme d'une solution aqueuse d'un sel d'argent à la peinture par électrodéposition

3. Peinture pour électrodéposition selon la revendication 1 ou 2, **caractérisée en ce qu'**elle est apte au dépôt cathodique.

4. Peinture pour électrodéposition selon l'une quelconque des revendications 1 à 3, **caractérisée en ce que** la peinture pour électrodéposition contient en tant que liant une résine époxy cationique, modifiée par une amine.

5. Procédé pour la préparation de peintures pour électrodéposition selon l'une quelconque des revendications 1 à 4, **caractérisé en ce qu'**on ajoute à la. solution et/ou dispersion aqueuse de liant et/ou à la pâte de pigment et/ou à la peinture pour électrodéposition des ions argent et/ou de l'argent élémentaire, de préférence sous forme d'une solution aqueuse de sel d'argent.

6. Procédé pour l'enduction de supports conducteurs de l'électricité, dans lequel
(1) le support est plongé dans une peinture à l'eau pour électrodéposition,
(2) le support est connecté en tant qu'une électrode,
(3) un feuil est déposé sur le support par du courant continu,
(4) le support laqué est retiré de la peinture pour électrodéposition et
(5) le feuil de peinture déposé est cuit au four, **caractérisé en ce qu'**on utilise une peinture pour électrodéposition selon l'une quelconque des revendications 1 à 4.

7. Procédé selon la revendication 6, **caractérisé en ce qu'**il est utilisé pour l'enduction de carrosseries de véhicules automobiles et de pièces de celles-ci, pour l'application d'un apprêt, dans le cadre d'une peinture multicouche ou pour l'enduction de pièces dans le secteur de la peinture industrielle, pour l'application d'un apprêt dans le cadre d'une peinture multicouche ou en tant que peinture monocouche.

8. Utilisation d'argent et/ou d'ions argent en tant que biocide dans des composants aqueux qui sont utilisés dans des procédés pour l'enduction par électrophorèse, de préférence dans le procédé pour la peinture par électrodéposition cathodique, **caractérisée en ce que** les ions et/ou l'argent élémentaire sont utilisés à une concentration de 0,1 à 20 mg, de préférence de plus de 1 à moins de 10 mg, de façon particulièrement préférée, de 2 à 7 mg, dans chaque cas par kg du composant aqueux.

9. Utilisation selon la revendication 8,
**caractérisée en ce que** l'argent ou les ions argent sont utilisés comme additif biocide dans des solutions et/ou dispersions aqueuses de résines synthétiques aptes au dépôt par électrophorèse, dans des peintures à l'eau pour électrodéposition et/ou des anolytes et/ou un ultrafiltrat et/ou un produit de recyclage.

10. Utilisation selon la revendication 8 ou 9, **caractérisée en ce que** les peintures à l'eau pour électrodéposition ont une teneur en solvants organiques de moins de 5% en poids, par rapport au poids total de la peinture pour électrodéposition.
